# EUROPEAN PATENT APPLICATION

(11) **EP 4 660 755 A1**
(43) Date of publication of application: **10.12.2025**
(21) Application number: 25180452.2
(22) Date of filing: 03.06.2025
(51) Int. Cl.: G06F 3/01, G06F 3/04815, G06T 19/00, G06T 19/20

(54) **TECHNIQUES FOR RENDERING ADJACENT ORNAMENTS**

(30) Priority: 09.06.2024 US 202463657951 P; 17.12.2024 US 202418984581
(71) Applicant: Apple Inc., Cupertino, CA 95014 (US)
(72) Inventor: MIRON, Aviv, Cupertino, 95014 (US); WONG, Laurence R., Cupertino, 95014 (US); LIVINGSTONE, Peter J., Cupertino, 95014 (US); ZHU, Yidi, Cupertino, 95014 (US); YIP, Hannah Wai, Cupertino, 95014 (US); BUERLI, Michael E., Cupertino, 95014 (US); CHEAH, Shu C., Cupertino, 95014 (US)
(74) Representative: Zacco Denmark A/S

(57) **Abstract**

Techniques are disclosed for rendering an ornament for a 3D object in a 3D environment displayed on a headset device and providing a user interface to manipulate the 3D object. In some embodiments, a user's input may be tracked. An ornament (e.g., base plate or a portion of the base plate) may be displayed adjacent to a volume associated with a 3D object in response to determining whether the user's input is within a threshold distance from the 3D object or a surface of its associated volume. In some embodiments, a visual display of a portion of the base plate may be altered, or a manipulation object or both may be displayed for manipulating the 3D object in response to the user's input within the threshold distance.

## Description

### BACKGROUND

In a 3D space (e.g., an XR environment including MR, AR, or VR), a user may want to manipulate an object in 3D space. One can use similar techniques as is present on a computer, but such techniques may not provide a good user experience when using a headset for MR, AR, or VR.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a method for providing a user interface to manipulate objects in a 3D environment displayed on a headset device. The method also includes receiving a definition of a first three-dimensional (3D) object relative to a first volume, the definition providing object coordinates of the first 3D object relative to volume coordinates of the first volume. The method also includes displaying the first 3D object in the 3D environment based on the volume coordinates of the first volume, where at least part of the first volume is transparent to a user of the headset device. The method also includes tracking eye movements of the user to determine a first gaze of the user. The method also includes determining the first gaze is within a threshold distance of a first portion of a surface of the first volume. The method also includes responsive to determining the first gaze is within the threshold distance of the first portion of a surface of the first volume, altering a visual display of the first portion of the surface of the first volume, displaying a manipulation object at a specified location relative to the first portion of the surface for manipulating the first 3D object, or both.

Another general aspect includes a method performed by one or more processors of a mobile device. The method also includes rendering, by the computing device, the virtual object at a first location on the display of the 3D environment. The method also includes receiving a user input at a second location on the display of the 3D environment. The method also includes determining a distance between (1) the user input at the second location and (2) the virtual object at the first location or a surface of a volume within which the virtual object is defined. The method also includes in response to determining the distance is within a threshold, rendering an ornament of or adjacent to the volume of the object.

These and other embodiments of the disclosure are described in detail below. For example, other embodiments are directed to systems, devices, and computer readable media associated with methods described herein.

A better understanding of the nature and advantages of embodiments of the present disclosure may be gained with reference to the following detailed description and the accompanying drawings

### BRIEF DESCRIPTION OF THE DRAWINGS

FIGs. 1A and 1B illustrate an example environment 100 for a user's interaction with a computing device, in accordance with some embodiments.
FIG. 2 illustrates an example system 200 for providing out-of-process effects, in accordance with some embodiments.
FIGs. 3A and 3B illustrate a manipulatable base plate associated with a 3D object displayed in an XR environment, in accordance with some embodiments.
FIG. 4 illustrates a base plate for a 3D object displayed in an XR environment, in accordance with some embodiments.
FIGs. 5A and 5B illustrate two overlapping base plates associated with two 3D objects displayed in an XR environment, in accordance with some embodiments.
FIG. 6 is a flowchart illustrating a method 600 for displaying a user interface to manipulate 3D objects in a 3D environment, according to some embodiments.
FIG. 7 is a flowchart illustrating a method 700 for rendering an ornament for a virtual object in a 3D environment, according to some embodiments.
FIGs. 8 and 9 illustrate methods of application processes, in accordance with some embodiments.
FIG. 10 illustrates a device for performing API, in accordance with some embodiments.
FIG. 11 illustrates a system for performing API, in accordance with some embodiments.
FIGs. 12 and 13 illustrate data flows related to API processes, in accordance with some embodiments.
FIG. 14 is a block diagram of an example electronic device, in accordance with some embodiments.

### DETAILED DESCRIPTION

Sometimes, it may be difficult to guide a user on how to change or resize volumes of 3D objects (or objects in a 3D environment, e.g., a resizable affordance) because it is unclear where the edges of a volume are, in particular, for a 3D object that has an irregular shape in the volume. A volume may refer to the three-dimensional space occupied by an object, or in which a software application can draw content (e.g., the 3D object). The 3D objects may be displayed on a mobile device, or in an extended reality (XR) environment (i.e., an umbrella term that covers virtual reality (VR), augmented reality (AR), mixed reality (MR)) in a headset device, etc. A user of a headset device may like to interact with the displayed 3D objects.

The disclosed techniques can enable a user to interact with or manipulate a 3D object easily, such as resizing or repositioning the 3D object. To resize or manipulate a 3D object and its associated volume (e.g., making a sphere larger or smaller), a base plate may be used. A base plate (also referred to as an ornament) may be an enclosed thin line (e.g., in a circle, square, or other shapes) that goes around the bottom surface of a volume associated with the 3D object, and may give a viewer (or a user of the XR) a visual boundary of the object. In some embodiments, a partial section of the base plate may have an altered visual display (e.g., highlighted or changed color) and follow a pointer (e.g., a cursor) used by the user, the user's gaze, or the user's attention. The base plate can guide the user's attention to how and where to resize the object when the user's gaze is close to or within a threshold distance from the object or a surface of its associated volume. When the user presses and drags on one edge or corner of the base plate, the object surrounded by the base plate can be repositioned or resized accordingly. In some embodiments, a grabber (an example of a manipulation object) close to the displayed and highlighted section of the base plate may be used for the user to interact with to resize the object. In some embodiments, the size of the base plate may be proportional to the size of the volume.

In some embodiments, the partially displayed section of a base plate can be rendered by masking out the area outside a specific radius of the user's gaze (i.e., the gaze effect), leaving only the user's gaze area. In some embodiments, multiple layers in 3D space may exist on the system, and a flag may be added to each layer to enable ray-plane interaction. As a result, multiple interactions from the user's gaze to several objects may be possible.

Finally, sometimes several base plates may overlap, for example, when two 3D objects are close to each other, or one is blocking another. An interaction order between the user's input (e.g., user's gaze) and one or more of the 3D objects may be used to activate the base plate of a particular object. For example, a 3D object that is occluded (or blocked) by another object is de-focused, and its base plate is not displayed. Thus, the object at the front has a base plate displayed. However, when the user interacts with the de-focused object (e.g., the occluded object), the de-focused object is activated again by displaying its base plate.

Embodiments of the present disclosure provide a number of advantages/benefits. For example, dynamically displaying a portion of a base plate and grabbers by following a user's gaze can provide the user with an intuitive way to interact with a 3D object while minimizing distractions. Additionally, the base plate associated with the 3D object and its volume can give the user an understanding of an object's boundary and reduce confusion when multiple 3D objects are present and overlap. Dynamically rendering base plates of 3D objects based on a user's interaction order with these objects can simplify the user's manipulation of these objects and provide a better user experience.

### I. USER INTERACTION USING A HEADSET

A computing device (e.g., headset) may render or display 3D virtual objects in an XR environment and allow a user of the computing device to interact with the virtual objects. To enable user-friendly interaction, the computing device may use various sensors (e.g., cameras) to sense the user's input (e.g., gaze location) in relation to the displayed virtual objects.

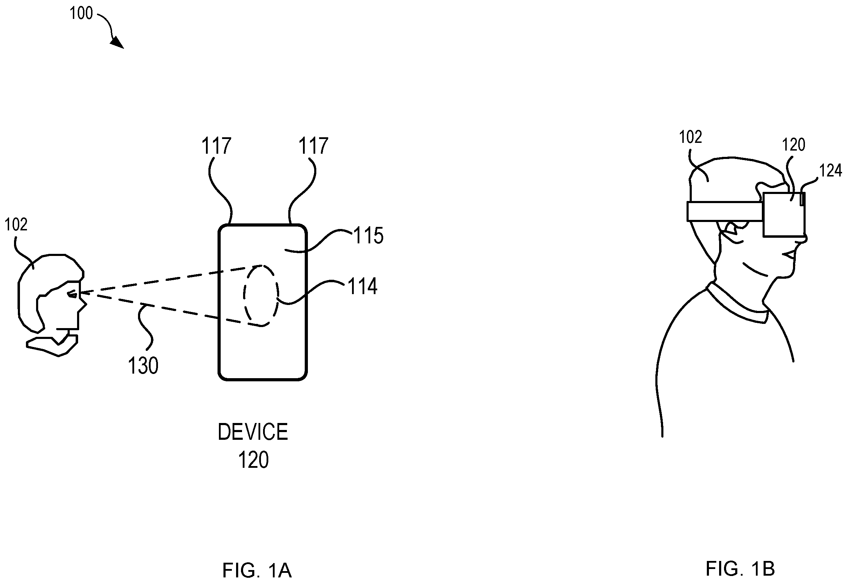

FIG. 1 (including FIGs. 1A and 1B) illustrates an example environment 100 for a user's interaction with a computing device, in accordance with some embodiments. FIG. 1A illustrates the user's gaze 130 and the gaze area 114 on a display 115 (e.g., XR environment) of a computing device 120. FIG. 1B illustrates the computing device 120 as a headset with one or more cameras 124 for tracking the eye movements of the user 102..

In example environment 100, a user 110 interacts with a computing device 120 having a display 115. As shown, the computing device 120 may include one or more speakers, such as speakers 117 (e.g., multiple speakers operable to generate spatialized audio) that is perceived, by the user 110 to be emanating from a location, separate from the location of the speakers 117, in the physical environment of the user 110. In one or more examples described herein, user 110 may gaze (e.g., 130) at computing device 120, and the device may sense a gaze location/area 114 of the user. In one or more implementations, the user's gaze location may constitute a user input to the device.

The computing device 120 may be a smart phone, a tablet device, or a wearable device such as a smart watch or a head mountable portable system (may be referred to as a headset), that includes a display system capable of presenting a visualization of an extended reality environment to the user 110. The computing device 120 may be powered with a battery and/or any other power supply. In an example, the display system of the computing device 120 provides a stereoscopic presentation of the extended reality environment, enabling a three-dimensional visual display of a rendering of a particular scene, to the user. In one or more implementations, instead of, or in addition to, utilizing the computing device 120 to access an extended reality environment.

The computing device 120 may include one or more cameras (e.g., visible light cameras, infrared cameras, etc.) Further, the computing device 120 may include various sensors that can detect user input including, but not limited to, cameras, image sensors, touch sensors, microphones, inertial measurement units (IMU), heart rate sensors, temperature sensors, Lidar sensors, radar sensors, sonar sensors, GPS sensors, Wi-Fi sensors, near-field communications sensors, etc.) Moreover, the computing device 120 may include hardware elements that can receive user input, such as hardware buttons or switches. User input detected by such sensors and/or hardware elements correspond to various input modalities for interacting with virtual content displayed within a given extended reality environment. For example, such input modalities may include, but not limited to, facial tracking, eye tracking (e.g., gaze direction), hand tracking, gesture tracking, biometric readings (e.g., heart rate, pulse, pupil dilation, breath, temperature, electroencephalogram, olfactory), recognizing speech or audio (e.g., particular hotwords), and activating buttons or switches, etc. The computing device 120 may also detect and/or classify physical objects in the physical environment of the computing device 120.

In one or more implementations, the computing device 120 may be communicatively coupled to a base device. Such a base device may, in general, include more computing resources and/or available power in comparison with the computing device 120. In an example, the computing device 120 may operate in various modes. For instance, the computing device 120 can operate in a standalone mode independent of any base device.

The computing device 120 may also operate in a wireless tethered mode (e.g., connected via a wireless connection with a base device), working in conjunction with a given base device. The computing device 120 may also work in a connected mode where the computing device 120 is physically connected to a base device (e.g., via a cable or some other physical connector) and may utilize power resources provided by the base device (e.g., where the base device is charging the computing device 120 while physically connected).

When the computing device 120 operates in the wireless tethered mode or the connected mode, a least a portion of processing user inputs and/or rendering the extended reality environment may be offloaded to the base device thereby reducing processing burdens on the computing device 120. For instance, in an implementation, the computing device 120 works in conjunction with a base device to generate an extended reality environment including physical and/or virtual objects that enables different forms of interaction (e.g., visual, auditory, and/or physical or tactile interaction) between the user and the extended reality environment in a real-time manner. In an example, the computing device 120 provides a rendering of a scene corresponding to the extended reality environment that can be perceived by the user and interacted with in a real-time manner. Additionally, as part of presenting the rendered scene, the computing device 120 may provide sound, and/or haptic or tactile feedback to the user. The content of a given rendered scene may be dependent on available processing capability, network availability and capacity, available battery power, and current system workload.

The computing device 120 may also detect events that have occurred within the scene of the extended reality environment. Examples of such events include detecting a presence of a living being such as a person or a pet, a particular person, entity, or object in the scene.

### II. OUT-OF-PROCESS EFFECTS FOR ELECTRONIC DEVICES

Remote user interface (UI) rendering effects provide increased privacy and efficiency in computer user input systems. In an aspect, an application specifies remote UI effects to be managed and rendered on UI elements separately from the application, such as by an effects component running outside of the application's operating system process. When user input indicates a preliminary interaction with a UI element, the remote UI effect can be rendered without the application's knowledge of the preliminary interaction, hence preserving a user's privacy from the application of preliminary UI interactions.

Aspects of this disclosure provide techniques for efficiently retaining privacy of a user's preliminary UI interactions from an application while still providing rendered feedback of the preliminary interactions to the user. Rendered feedback of a preliminary interaction with a UI element might include, for example, a rendered visual cue (e.g., a glow, a lift, a shape change, a transparency change, etc.) and/or audio cue when a hand gesture occurs near a UI element, when a user's hand hovers over or near a UI element, when a user's gaze location is near or hovers near or over the UI element, or when a pointer controlled by a trackpad or pointer device (e.g., a mouse, a joystick, or the like) hovers at or near the UI element. In an aspect, when it is determined that a user intends to interact with an application (or a UI element of the application), then the user input may be considered no longer to be preliminary (e.g., may be considered to be confirmed), and some user input may be provided to the application. In an aspect, an application may make a declaration or definition of a rendered feedback effect of preliminary interactions with a UI element before preliminary interactions occur, giving the application control over the nature of the preliminary interaction feedback effect, even when the application never learns of a preliminary interaction with its UI elements. The application may provide a declaration or definition of the effect to an operating system or another software component for managing rendering of the preliminary interactions. When the rendering of the effect is managed in a separate operating system process from the application proving the declaration or definition of the effect, the effect is referred to herein as a remote effect or an "out-of-process effect."

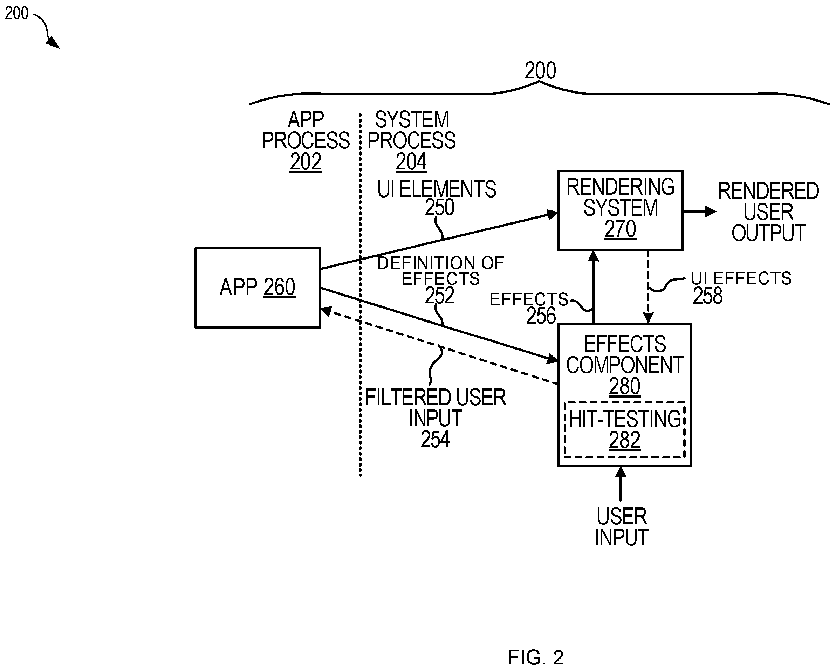

FIG. 2 illustrates an example system 200 for providing out-of-process effects, in accordance with some embodiments. System 200 may be implemented, for example, on computing device 120. System 200 includes an application (app) process 202 corresponding to an application 260, and a system process 204, including a rendering system 270 (e.g., a rendering process) and an effects component 280 (e.g., an effects process). In some aspects, processes 202 and 204 may be separate processes created and managed by an operating system and run on a common device, such as computing device 120. Aspects of the system process 204 (e.g., including the rendering system 270, the effects component 280, and/or hit-testing 282) may be implemented in hardware, software, or a combination thereof.

As depicted in FIG. 2, system process 204 includes both rendering system 270 and effects component 280. However, this disclosure is not so limited. For example, rendering system 270 may run in a separate process from the effects component 280, the rendering system 270 and the effects component 280 may be implemented in a common process, or the rendering system 270 and effects component 280 may be further distributed to run in more than two processes, all of which may be separate from app process 202. Similarly, in other aspects, app 260 may be distributed to run in more than one app process. Operating system processes, such as app process 202 and system process 204, may provide security and/or privacy between the processes when running on a common device, such as computing device 120 of FIG. 1. For example, app process 202 and system process 204 may operate with different virtual memory spaces as controlled by an operating system and enforced by a processor's memory controller hardware. Separate app and system processes may help prevent app 260 from accessing data inside system process 204. In other aspects, system process 204, rendering system 270 and effects component 280 may include one or more operating system drivers that do not run in a virtual memory space.

Operation of system 200 may include receiving a user input, and outputting a rendered effect as feedback of the user input, and this may be performed outside of the app process 202 and without knowledge of app 260. App 260 may provide a description of its UI element(s) 250 to rendering system 270, and app 260 may provide a definition of its effects 252 to be rendered in response to future user input. When effects component 280 receives user input corresponding to a definition of effects received from app 260, effects component 280 may cause effects 256 to be rendered by rendering system 270 as user output.

In optional aspects of system 200, effects component 280 may learn of a location of a UI element (e.g., a location of a button or scroll bar), for example via optional UI elements 258 message from rendering system 270. In one or more implementations, effects component 280 may then perform optional hit-testing 282 between a current location of a UI element and a current location of user input. In one or more other implementations, hit-testing 282 may be performed by another system process that is separate from the effects component 280 and that performs hit-testing for multiple different purposes (e.g., for the effects component 280 and other components and/or processes). When a particular user input is identified as being associated with a particular UI element by hit-testing 282 (e.g., by the effects component 280 or another system process of the computing device 120) between a user input and a particular UI element of an app 260, hit-testing 282 may identify a preliminary interaction with the particular UI element of the app 260. In one or more implementations, hit-testing 282 may include a "fuzzy" hit-testing operation that intentionally biases the hit-test result toward interactive UI elements (e.g., and away from non-interactive UI elements). As examples, when a user's gaze is approximately halfway between an interactive UI element (e.g., a button, a slider, a list, a text-entry field, etc.) and a non-interactive UI element (e.g., static text and/or unlinked images) and/or when the user's gaze intersects with an interactive UI element and a non-interactive element at different depths, hit-testing 282 may determine that the gaze is associated with the interactive UI element. When a preliminary interaction is identified, effects 256 may be rendered as user output without notifying app 260 of the user input or the identified interaction. Alternately, when an alternate user input is identified as a confirmed interaction by a user with a UI element, then effects component 280 or another system process may notify app 260 of the confirmed interaction as filtered user input message 254.

The definition of effects 252 may describe a variety of effects that an app instructs the system process 204 to render on one or more UI elements. Each effect defined in the definition of effects 252 may correspond to a certain type of user input interaction with a particular UI element. In aspects, the definition of effects 252 may describe a plurality of effects to be rendered in response to a single user input interaction with a single UI element. For example, definition of effects 252 may indicate that when a user's gaze is within a certain range of a particular button UI element, the button will start to glow to a certain brightness level and/or emit a sound, and when a gaze is in a closer distance range to the button, the UI element may both glow at a brighter level and also wiggle and/or generate a buzzing sound, and when a gaze is in a third closest range (perhaps gazing directly at the button and/or gazing directly at the button for at least a predefined dwell time, such as one second, one half second, one tenth of a second, or a smaller fraction of a second), the user interaction may be identified as a confirmed interaction (e.g., an interaction intended by the user as an actuation of the button).

In an alternate optional aspects, app 260 may provide effects component 280 with information describing the UI element of the app 260 directly (e.g., instead of the effects component 280 receiving UI information from the rendering system 270). Additionally, instead of hit-testing based on location, hit-testing 282 may more generally determine that a certain user input corresponds to an interaction with a particular user interface element. For example, a user's verbal audio input saying "the red button" may cause the hit-testing 282 to associate that audio input with a red button UI element.

In an aspect, definition of an effect 252 may be a declarative definition. In this aspect, app 260 may provide all information necessary for a software component outside of app process 202, such as effects component 280, to cause the app's desired effect to be rendered without the app's knowledge or further participation. A declarative definition of an effect may include an identification of a UI element, for example provided by a user interface framework or the operating system, an identification of a triggering user input, and an identification of an effect to be rendered when the triggering user input corresponds to the first UI element. In one or more implementations, the identified effect may include a selected one of multiple pre-defined effects (e.g., a highlight effect, a glow effect, or a lift effect) available from the system process, may include an indication for the system process to automatically select a pre-defined effect, or may include instructions for rendering a custom effect provided by the app 260.

In one or more implementations, the identified effect may be applied to an entire UI element or a to sub-view or sub-element of a UI element (e.g., an internal background sub-view of a text field, a sub-element of a slider such as a thumb of the slider, a sub-element of a segmented control element, a cell of a collection view, a cell of a table view, or a sub-element of a date picker or other picker). In one or more implementations, the same effect can be applied to multiple sub-elements of a UI element. In one or more implementations, different predefined or custom effects can be applied to different sub-elements of a UI element. In an example of a collection or a table of cells, an effect may be defined based on heuristics, such as whether a given cell is highlightable or selectable. For example, these heuristics may model the intent of showing a hover effect if a cell is interactive (e.g., where a nil effect may be used if a cell is non-interactive). In one or more implementations, if an app has explicitly set an effect style for a cell, heuristics may be disabled and the explicit style may be used. For example, a hover effect may be disabled for an application's list row, view hierarchy, etc. In one or more implementations, a definition of an effect may include multiple definitions of multiple effects (e.g., the same or different effects) for multiple respective sub-elements of a UI element (e.g., the same or different effects may be applied when a hover interaction is detected at or near a selectable date or time in a picker).

In one or more implementations, providing the definition of an effect 252 may include providing a definition of a shape of an effect and/or a shape of an underlying UI element. For example, the shape of an effect may include a capsule shape, a rectilinear shape, a circular shape, or other predefined or custom shape. In one or more implementations, the definition of the shape may include definitions of one or more of a corner shape, a corner radius, a corner curve, corner masking, and/or other corner and/or edge definitions for a shape. In one or more implementations, the shape may not have an intrinsic frame or size, and may instead be resolved to a concrete shape within a given frame (e.g., which may more provide a more expressive shape that can automatically adapt to the view with which the shape is associated). For example, a pre-defined capsule shape may be provided that can include corners that are automatically resizable based on a provided frame for the shape.

In one or more implementations, the definition of the shape may include a definition of an inset shape (e.g., for an effect that is inset to, or occurs within the boundaries of, a UI element) and/or an outset shape (e.g., a shape that is outset to, or occurs outside the boundaries of, a UI element, such as by padding via negative insets). In one or more implementations, the definition of the shape can automatically inset a rounded-rectilinear shape that preserves concentric corner radii proportional to its size. In one or more implementations, the definition of the shape may include a definition of a dynamic shape (e.g., that can be resolved within a given context). For example, a dynamic shape definition may be used to create a shape that uses fractional corner radii. A dynamic shape may have dynamic edges and/or corners, and/or may include dynamic transparency, brightness, or other dynamic features of the overall shape. In one or more implementations, a shape for an effect may be expressed as a modification of a view's (e.g., a UI element's) content shape or its container's shape. For example, the app 260 may modify an effect shape for a button UI element to provide padding while preserving its original shape heuristics. In one or more implementations, the shape may be defined to correspond to the container in which the shape is to be rendered. In one or more implementations, a shape may be defined as a nil shape that causes use of an implicit default shape.

In one or more implementations, a definition of an effect 282 may be provided without a shape definition. In one or more implementations, when a shape definition is not provided, a default shape may be determined by the system process. In one or more implementations, when a shape definition is not provided for a pointer-style input, a predefined preview shape for the pointer may be used for the shape of an effect. In one or more implementations, hover effects may be deactivated during a drag touch input by a user. In one or more implementations, drag touch inputs (e.g., for some UI elements) may be disabled when a hover effect is applied (e.g., to other UI elements). In one or more implementations, the UI element may be vended from one or more files, such as a Universal Scene Description (USDZ) file. In another implementation, the UI element referenced in the app's declarative definition may be provided by the operating system.

### III. RENDERING ADJACENT ORNAMENTS

A base plate (may also be referred to as an ornament) of a 3D object is introduced to help a user of a headset, enabling an XR environment, to resize the 3D object. The display of the base plate can help the user's interaction with the 3D object while enhancing the user's viewing experience.

The headset (e.g., computing device 120, also referred to as an electronic device) may be implemented, for example, as a tablet device, a smartphone, or as a head mountable portable system (e.g., worn by a user). The electronic device includes a display system capable of presenting a visualization of an extended reality environment to the user. The electronic device may be powered with a battery and/or another power supply. In an example, the display system of the electronic device provides a stereoscopic presentation of the extended reality environment, enabling a three-dimensional visual display of a rendering of a particular scene, to the user. In some embodiments, instead of, or in addition to, utilizing the electronic device to access an extended reality environment, the user may use a handheld electronic device 104, such as a tablet, watch, mobile device, and the like.

The electronic device (e.g., the headset) may include one or more cameras such as camera(s) (e.g., visible light cameras, infrared cameras, etc.) For example, the electronic device may include multiple cameras . For example, the multiple cameras may include a left facing camera, a front facing camera, a right facing camera, a down facing camera, a left-down facing camera, a right-down facing camera, an up facing camera, one or more eye-facing cameras, and/or other cameras. Each of the cameras may include one or more image sensors (e.g., charged coupled device (CCD) image sensors, complementary metal oxide semiconductor (CMOS) image sensors, or the like).

Further, the electronic device (e.g., the headset) may include various sensors including, but not limited to, other cameras, other image sensors, touch sensors, microphones, inertial measurement units (IMU), heart rate sensors, temperature sensors, depth sensors (e.g., Lidar sensors, radar sensors, sonar sensors, time-of-flight sensors, etc.), GPS sensors, Wi-Fi sensors, near-field communications sensors, radio frequency sensors, etc. Moreover, the electronic device may include hardware elements that can receive user input such as hardware buttons or switches. User inputs detected by such cameras, sensors, and/or hardware elements may correspond to, for example, various input modalities. For example, such input modalities may include, but are not limited to, facial tracking, eye tracking (e.g., gaze direction), hand tracking, gesture tracking, biometric readings (e.g., heart rate, pulse, pupil dilation, breath, temperature, electroencephalogram, olfactory), recognizing speech or audio (e.g., particular hotwords), and activating buttons or switches, etc. In some embodiments, facial tracking, gaze tracking, hand tracking, gesture tracking, object tracking, and/or physical environment mapping processes (e.g., system processes and/or application processes) may utilize images (e.g., image frames) captured by one or more image sensors of the cameras and/or the sensors.

### A. User Interface

### 1. Base Plate Introduction and Object Manipulation

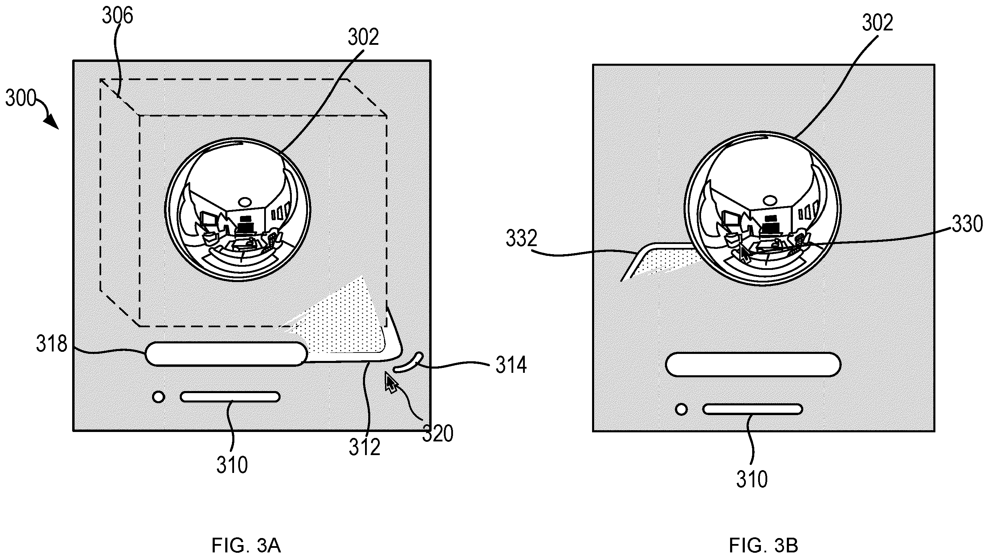

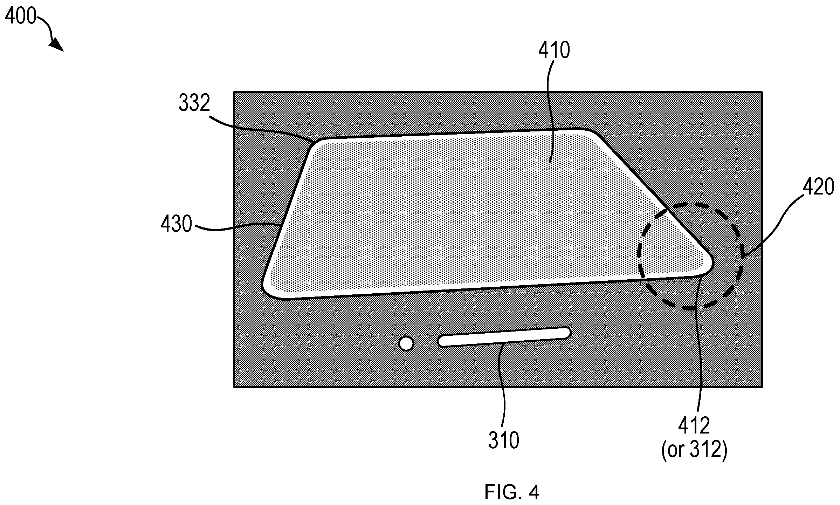

FIG. 3 (including FIGs. 3A and 3B) illustrates a manipulatable base plate associated with a 3D object displayed in an XR environment, in accordance with some embodiments. The base plate in FIG. 3 may be partially displayed depending on a user's input. FIG. 4 illustrates an entire base plate 410 for the 3D object in FIG. 3. The 3D XR environment (e.g., 115) in which the 3D object is displayed may be generated by a computing device 120, such as a headset.

In FIGs. 3A and 3B, a sphere object 302 may be rendered inside a volume 306 (or volumetric geometry), which may be a transparent or partially transparent cubic box that a software application can draw content (e.g., the 3D objects). At the bottom plane of the volume 306, a portion 312 of a base plate 410 may be displayed. A corner grabber 314 (called a resize grabber) can allow a user to resize the object and its volume. A front grabber (called position grabber) 310 at the front bottom can be used by a user to reposition the window displaying the object and its volume. An oval shape bar 318 may be used to indicate the boundary (e.g., bottom surface) of the volume containing the object because the volume 306 may be transparent (i.e., not visible to the user), and the base plate may be partially displayed (e.g., 312).

A cursor 320 may represent the location (e.g., 114) of a user's gaze (also referred to as a gesture event). A small radius of area may be designated around where the user's gaze 130 is directed. When the cursor 320 moves around, portion 312 (covering the small radius of the user's gaze) of the base plate (e.g., 410 of FIG. 4) may be highlighted and moved with the cursor 320. When the user's gaze (i.e., the cursor) is directed toward the sphere object 302, the highlighted portion 332 of the base plate 410 may gradually disappear (e.g., become transparent) since it is behind the sphere object 302, as shown in FIG. 3B. In some embodiments, for privacy reasons, the gaze may be outside an application process (called out-of-process effect). The base plate only highlights the portion (e.g., 312 or 332, a glowing portion or a section of a line at the edge of the base plate) that a user's gaze is directed can avoid distraction while guiding the user to the edge of the volume 306.

As mentioned above, in some embodiments, the grabber 314 at the corner of the base plate 410 may be used by the user to resize the sphere object, such as by using a hand gesture (e.g., pinch) or a computer mouse. In other embodiments, the user may also resize the sphere object by directly interacting with the corners of the base plate 410, such as front corner 312 and rear corner 332. In some embodiments, a user may resize and also change the shape of the 3D object (e.g., sphere object) by moving the corner grabber 314 in the direction of a shape it desires to be (e.g., from round shape to oval shape).

The size of the base plate (312 or 410) may be proportional to the size of the volume 306 containing the sphere object (i.e., the object's associated volume). The base plate may have different shapes (e.g., square, circle, polygon, etc.) depending on the size and shape of the volume, and cover the perimeter of the volume. For example, if a volume is a cube, then the base plate may be a square shape. When the user resizes the volume 306 (or the sphere object 302), the base plate can shrink or enlarge accordingly. In some embodiments, the base plate 410 may also be displayed on any surface of the object's associated volume, such as the top surface, side surface, or bottom surface, depending on the location of the user's input.

Additionally, in some embodiments, a volume and its associated object may be kept in a reasonable proportion, such that the object can be manipulated easily by a user. For example, the object's associate volume may have a minimum and maximum size when compared to the object, such as small enough to cover the object but not too big to become unusable. As an example, if a small object has a huge associated volume (e.g., 1:10 ratio), using the resize grabber (e.g., 314) to resize the volume may have little impact on the object. Therefore, the volume and the object inside the volume may not be out of proportion.

### 2. Rendering Base Plate

When rendering a part of a base plate to create a gaze effect (e.g., highlighting the area of the user's gaze), various techniques may be used to alter the appearance of the part of the base plate 410. For example, in the process of rendering the highlighted portion (e.g., 312 and 332) of the base plate 410, the entire base plate 410 may be rendered first, as shown in FIG. 4, such as a rounded rectangle that takes the bottom plane of the volume 306 containing a 3D object. Then, a material shader (e.g., a program for determining the appearance of surfaces in 3D rendering) can be used to mask out the area outside a specific radius 420 of the user's input (e.g., the user's gaze) to create the gaze effect, and the small radius area 420 may follow the user's gaze. For example, when the user's input is directed to the front-right corner, only the front-right corner within the small radius area 420 may be displayed or highlighted. When the input is directed to the left-right corner, the front-right corner may become invisible (or transparent) to the user, and the left-right corner within the small radius area 420 may be displayed or highlighted instead.

In some embodiments, the highlighted portion of the base plate 410 may be performed in various ways, such as changing brightness, using a different color, using a pointer or icon, changing the thickness of the line, etc. Additionally, the base plate may be rendered in various colors or scenes. Other techniques, such as clipping planes or various degrees of transparency (e.g., adjusting the alpha values) may also be used to create the gaze effect.

### 3. Multiple Interactions

Creating the gaze effect may depend on the interaction between the user's input (i.e., user's gaze) and 3D objects. In some situations, multiple 3D objects may interact with the user's gaze, either directly or indirectly, due to the arrangement of the objects. For example, normally, the base plate may not be highlighted (e.g., 332) when the user's input is on the sphere object 302 (the first visible object). It may be desirable that the user's interaction is not limited to the first object receiving the user's input, but can be configured to extend beyond the first object.

In some embodiments, a ray may be used to represent or simulate the user's gaze. A ray may start where the user's gaze is located, and follow the direction of the gaze. The first object that the ray reaches may be the one that may receive the input. For example, in FIG. 3, when the user looks at a base plate, portion 312 of the base plate receives the input and is highlighted. When the user looks at the sphere object (i.e., where the cursor 330 is located), the sphere object may receive the input, not the base plate, as shown in FIG. 3B. Thus, the base plate 332 may not be highlighted or may become transparent (invisible to the user). In some embodiments, the base plate may flicker when the user's input is on an object other than the base plate to signal that the base plate still exists.

In some instances, the user may still want the base plate to be highlighted even if the user's gaze is on the sphere object. Such a display may be designed to be configurable. For example, there may be a selection button on the sphere that allows the user to choose whether the base plate is to be highlighted. In some embodiments, the selection button may be displayed somewhere (e.g., at a corner) in the XR environment to provide easy control. Alternatively, a voice control may also be used. In such an instance, multiple layers in 3D space may be used or exist on the system, and a flag may be added to each layer to enable ray-plane interaction (e.g., identifying a point where a ray intersects a plane in a 3D space and/or a virtual ray interacts with an interactive object to trigger various events) for rendering gaze effects on base plates. When the user's gaze is directed at a particular layer (e.g., a foreground layer associated with the sphere object) that has ray-plane interaction enabled, the base plate may still be displayed (e.g., activating a background layer) even if the base plate is behind the sphere object. In other words, multiple interactions from the user's gaze to multiple layers may be possible. In some embodiments, depth testing (e.g., determining whether to render part of or whole object depending on its depth value) and depth sorting (e.g., rendering objects based on their relative distance from a viewer) may be involved to allow a better display of the base plate.

### 4. Overlapping Base Plates

Sometimes, several base plates may overlap, for example, when two 3D objects are close to each other, or one is blocking another. Techniques are disclosed to display the base plates of their corresponding 3D objects properly to provide a better user experience.

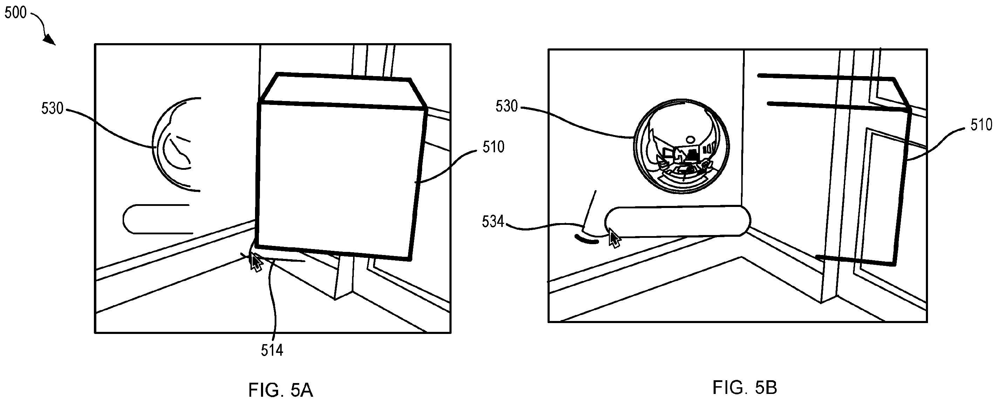

FIGs. 5A and 5B illustrate two overlapping base plates associated with two 3D objects displayed in an XR environment, in accordance with some embodiments. In some embodiments, interaction order between the user's input (e.g., user's gaze) and one or more of the 3D objects may be used. By default (e.g., without user interaction), the based plate of a 3D object closer to the user (or user's view) may be displayed. An object that receives a user's interaction may be activated to display its corresponding base plate. For example, without any user interactions, an object that is occluded (or blocked) by another object may be de-focused (or deactivated), and its corresponding base plate may not be displayed. Thus, the object at the front (or closest to the user/viewer) has a base plate displayed. However, when the user interacts with the de-focused object (e.g., the occluded object) by directing the user's gaze toward the de-focused object, the de-focused object is activated again by displaying its base plate.

As shown in FIGs. 5A and 5B, two objects, a sphere 530 and a box 510, are very close to each other. As a result, their respective base plates (534 for the sphere 530 and 514 for the box 510) may overlap. In FIG. 5A, because the box 510 is closer to the user and blocks the sphere 530, the base plate 514 of the box 510 is displayed, not the base plate 534 of the sphere 530. However, as shown in FIG. 5B, when the user interacts with the sphere 530 (e.g., directs its gaze or clicks using a mouse), the sphere 530 and its base plate 534 are displayed even though the sphere 530 is behind the box 510.

### B. Process Flows

### 1. Displaying a Manipulation Object

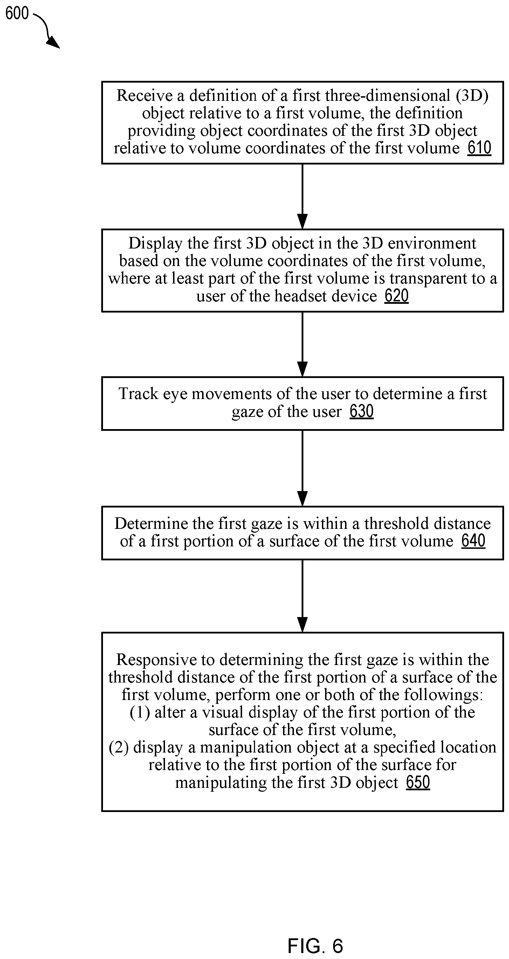

As discussed above, a 3D object (e.g., a sphere 302) may be manipulated (e.g., resized) by using a user interface displaying as a grabber (an example of a manipulating object) or highlighting a portion (an example of altering a visual display) of the base plate associated with a volume containing the 3D object. The process of displaying the object may be depicted in FIG. 6.

FIG. 6 is a flowchart illustrating a method 600 for displaying a user interface to manipulate 3D objects in a 3D environment, according to some embodiments. At step 610, a definition of a first three-dimensional (3D) object relative to a first volume may be received. The definition can provide object coordinates of the first 3D object relative to the volume coordinates of the first volume. Object coordinates may refer to the internal coordinate system of the 3D object itself, such as positions of vertices, edges, and surfaces that make up the object's geometry. The volume coordinates (may be referred to as a global coordinate system) may define the position and orientation of the 3D object within a larger 3D space or volume. For example, in FIG. 3, a definition of a sphere 302 related to its associated volume may be received. The definition can provide the object coordinates (e.g., x, y, and z coordinates) of the sphere 302 relative to the volume coordinates (e.g., width, height, and depth) of its associate volume. In some embodiments, volume coordinates may be represented in different coordinate systems, such as Cartesian coordinates, spherical coordinates, etc. In some embodiments, the relationship between the object coordinates and the volume coordinates may be established through a transformation matrix or mapping function.

At step 620, the first 3D object in the 3D environment may be displayed based on the volume coordinates of the first volume, where at least part of the first volume is transparent to a user of the headset device. For example, in FIG. 3, sphere 302 (i.e., the first 3D object) may be displayed based on its associated volume coordinates by translating its object coordinates to the global coordinate system, such as shifting its origin to a desired location within the volume. Some parts of its associated volume may be transparent (or invisible) to a user using a headset device for viewing in an XR environment (covering MR, AR, and VR). For example, the base plate surrounding the bottom surface of the object's associated volume 306 may be partially displayed (e.g., only part of the base plate 410 of FIG. 4 is displayed as shown in 312 or 332 of FIG. 3).

At step 630, eye movements of the user may be tracked to determine a first gaze of the user. For example, in FIG. 3, the user's gaze may be tracked, represented as the cursor 320 of FIG. 3A in the XR environment. In some embodiments, one or more cameras inside the headset may be used to track the eye movements of the user wearing the headset. A ray may be cast in the direction of the user's gaze to the XR environment to determine the gaze location/area (114 or the cursor 320).

At step 640, the first gaze is determined to be within a threshold distance of a first portion of a surface of the first volume. For example, in FIGs. 3 and 4, the user's gaze 320 may be determined to be close to and within a threshold distance (e.g., a small radius of area 420 of FIG. 4) of a portion of the bottom surface 318 of the volume 306 associated with the sphere 302. The portion may be a corner section (e.g., 312 or 412) of the base plate 410 located at the bottom surface of the volume 306 containing the sphere 302. The threshold distance may be represented by a radius in pixels (deemed "close enough", such as 20 ~90 pixels) forming a circular area, such as 420 of FIG. 4. In some embodiments, the threshold distance may be represented in a square area, a vector, etc. In some embodiments, the surface of volume 306 may be the top surface, side surface, or bottom surface, depending on the gaze location (e.g., 114 or 320).

At step 650, responsive to determining the first gaze is within the threshold distance of the first portion of a surface of the first volume, a visual display of the first portion of the surface of the first volume may be altered, or a manipulation object may be displayed at a specified location relative to the first portion of the surface for manipulating the first 3D object, or both. For example, in FIGs. 3 and 4, the user's gaze may be determined to be at the gaze location (e.g., cursor 320). Then, the corner section 312 of the base plate 410 within the small radius of area 420 of FIG. 4 may be highlighted (an example of altered visual display, by changing brightness, colors, transparency, etc.), while other parts of the base plate may be masked out (e.g., becoming transparent or invisible) by using a material shader as discussed above in FIG. 4 for the user to resize the sphere 302.

Additionally, manipulation objects, such as a position grabber 310, and a resize grabber 314 displayed close to the highlighted portion 312 of the base plate, such as a few pixels away, can allow the user to manipulate (e.g., reposition, resize, or change the coordinate values) the sphere 302. In some embodiments, in FIGs. 3 and 4, both the highlighted (i.e., altering the visual display) portion 312 or 332 of the base plate and the resize grabber 314 may be used by the user to resize the sphere 302. To reposition the sphere 302, the user may move either an edge 430 of the base plate 410 or the front grabber 310.

### 2. Displaying an Ornament

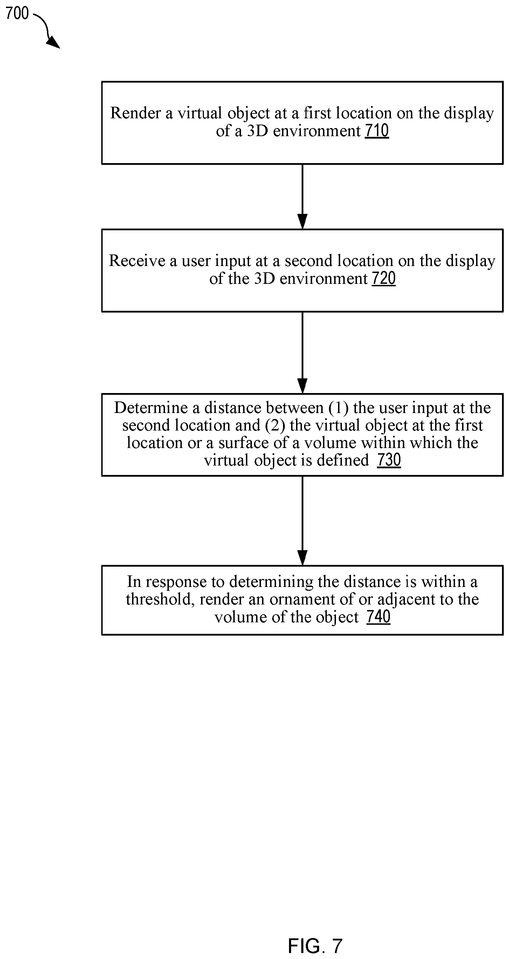

Additionally, as discussed above, a base plate (312 of FIG. 3 or 410 of FIG. 4), referred to as an ornament, associated with a volume containing the object (e.g., sphere 302) can be displayed at the bottom of the volume. An ornament, such as the base plate, can provide a visual display of the boundary of the volume and enhance the ability for a user to interact with (e.g., resize) the virtual object (e.g., sphere 302). The process of displaying the base plate may be illustrated in FIG. 7.

FIG. 7 is a flowchart illustrating a method 700 for rendering an ornament for a virtual object in a 3D environment, according to some embodiments. At step 710, a virtual object may be rendered at a first location on the display of the 3D environment. For example, in FIG. 3, a 3D virtual object (e.g., sphere 302) may be rendered at a location or particular object coordinates within a volume in a 3D environment 300, such as in the middle (e.g., 114) of an XR environment (e.g., display 115) within the computing device 120 (e.g., a headset).

At step 720, a user input may be received at a second location on the display of the 3D environment. For example, in FIG. 3, a user's gaze 130 represented as the cursor 320 in FIG. 3 may be detected as an input at the bottom corner in the 3D environment 300. In some embodiments, the user input may be a mouse cursor, a motion controller input (e.g., gaming controller), or a user's hands, In some embodiments, one or more cameras in a headset 120 (or computing device) may track the user's eye movements. A ray may be cast in the direction of the user's gaze to the XR environment to determine the gaze location (114 or the cursor 320).

At step 730, a distance between (1) the user input at the second location and (2) the virtual object at the first location or a surface of a volume within which the virtual object is defined may be determined. For example, In FIG. 3, the distance between the gaze location (i.e., the cursor 320 as the user input) and the location of the sphere 302 (e.g., the surface of the sphere) may be determined. In other embodiments, the distance between the gaze location (i.e., the cursor 320) and the bottom surface 318 of volume 306 associated with or defining the sphere 302 may be determined.

At step 740, in response to determining the distance is within a threshold, an ornament of or adjacent to the volume of the object can be rendered. For example, in FIGs. 3 and 4, if the distance discussed in the prior step is determined to be within a threshold (e.g., a radius in pixels, such as 20 ~180 pixels, forming a circular area), a base plate 410 (or a portion 312 of the base plate 410) at a flat surface below (e.g., bottom surface) or adjacent to the volume 306 associated with the sphere 302 may be rendered (e.g., displayed or highlighted if it has already been displayed). In some embodiments, the threshold may be represented by a small radius of area, such as 420 of FIG. 4. In addition to the base plate, in some embodiments, a grabber (e.g., 314) may also be rendered (e.g., displayed or highlighted) close to the gaze location (or cursor) 320, which is within the threshold distance from the sphere 302 or bottom surface 318 of the volume 306. The displayed base plate may be proportional to the size of the volume associated with the sphere 302.

In some embodiments, when the user input is directed to the virtual object itself as shown in arrow/cursor 330 of FIG. 3B, such that the first location (for virtual object 302) and the second location (for arrow/cursor 330) overlap. The base plate (e.g., 332) adjacent to or behind the virtual object (e.g., sphere object 302) may not be highlighted or may become transparent (or invisible) to the user. In some embodiments, the user can configure whether to display the base plate under such overlap condition.

### IV. APPLICATION PROGRAMMING INTERFACE

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

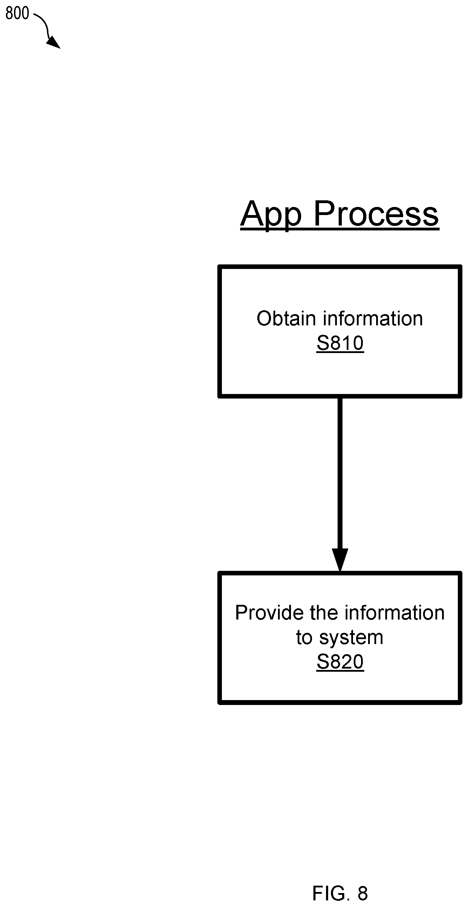

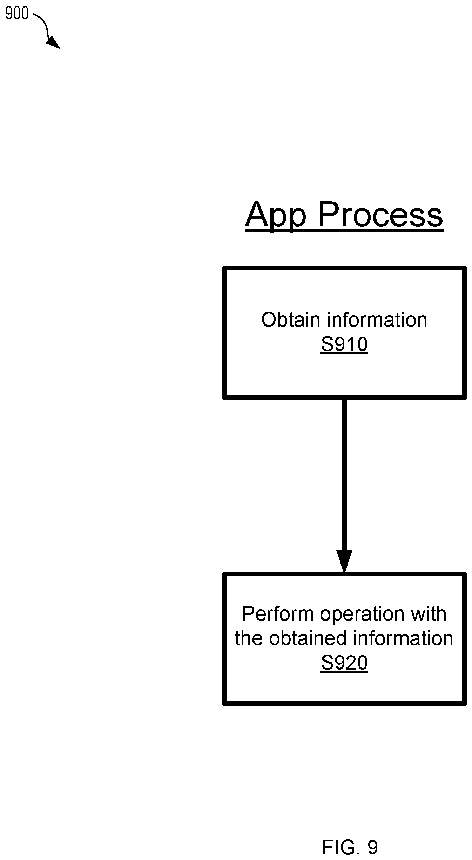

Implementations within the scope of the present disclosure include a computer-readable storage medium that encodes instructions organized as an application (e.g., application 1020) that, when executed by one or more processing units, control an electronic device (e.g., device 1010) to perform the method of FIG. 8, the method of FIG. 9, and/or one or more other processes and/or methods described herein.

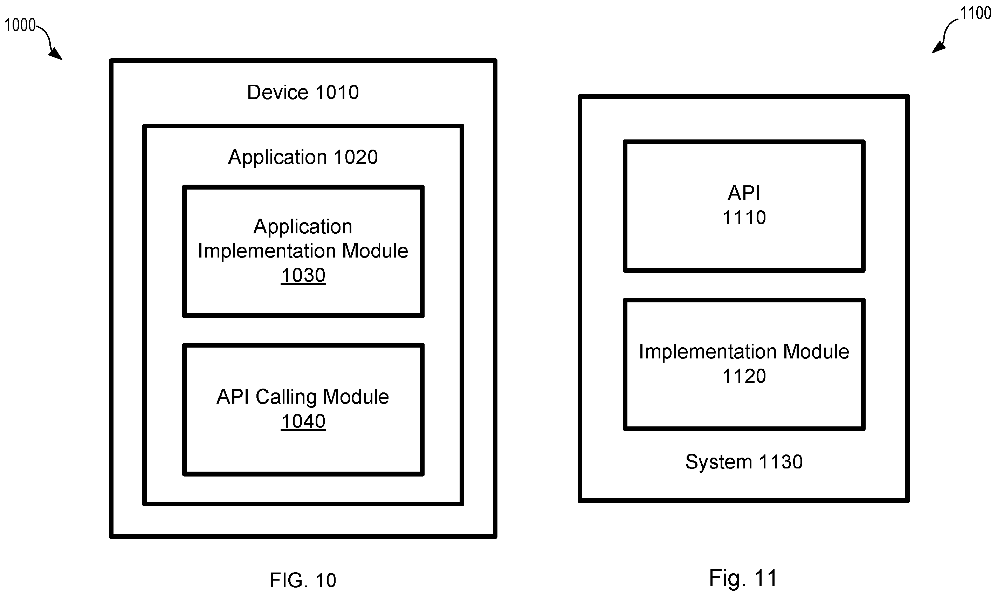

It should be recognized that application 1020 (shown in FIG. 10) can be any suitable type of application, including, for example, one or more of: an accessory companion application, a browser application, an application that functions as an execution environment for plug-ins, widgets or other applications, a fitness application, a health application, a digital payments application, a media application, a social network application, a messaging application, and/or a maps application. In some embodiments, application 1020 is an application that is pre-installed on device 1010 at purchase (e.g., a first party application). In other embodiments, application 1020 is an application that is provided to device 1010 via an operating system update file (e.g., a first party application or a second party application). In other embodiments, application 1020 is an application that is provided via an application store. In some embodiments, the application store can be an application store that is pre-installed on device 1010 at purchase (e.g., a first party application store). In other embodiments, the application store is a third-party application store (e.g., an application store that is provided by another application store, downloaded via a network, and/or read from a storage device).

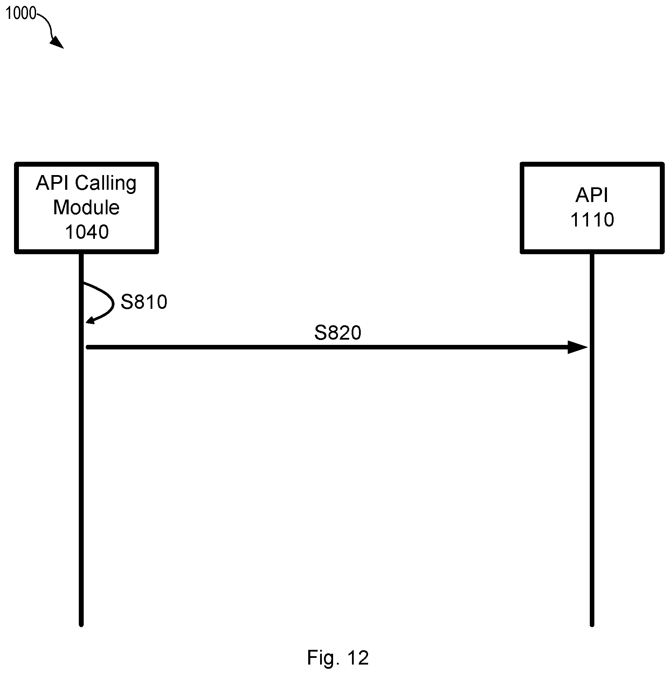

Referring to FIG. 8 and FIG. 12, application 1020 obtains information (e.g., S810). In some embodiments, at S810, information is obtained from at least one hardware component of the device 1010. In some embodiments, at S810, information is obtained from at least one software module of the device 1010. In some embodiments, at S810, information is obtained from at least one hardware component external to the device 1010 (e.g., a peripheral device, an accessory device, a server, etc.). In some embodiments, the information obtained at S810 includes positional information, time information, notification information, user information, environment information, electronic device state information, weather information, media information, historical information, event information, hardware information, and/or motion information. In some embodiments, in response to and/or after obtaining the information at S810, application 1020 provides the information to a system (e.g., S820).

In some embodiments, the system (e.g., 1130 shown in FIG. 11) is an operating system hosted on the device 1010. In some embodiments, the system (e.g., 1130 shown in FIG. 11) is an external device (e.g., a server, a peripheral device, an accessory, a personal computing device, etc.) that includes an operating system.

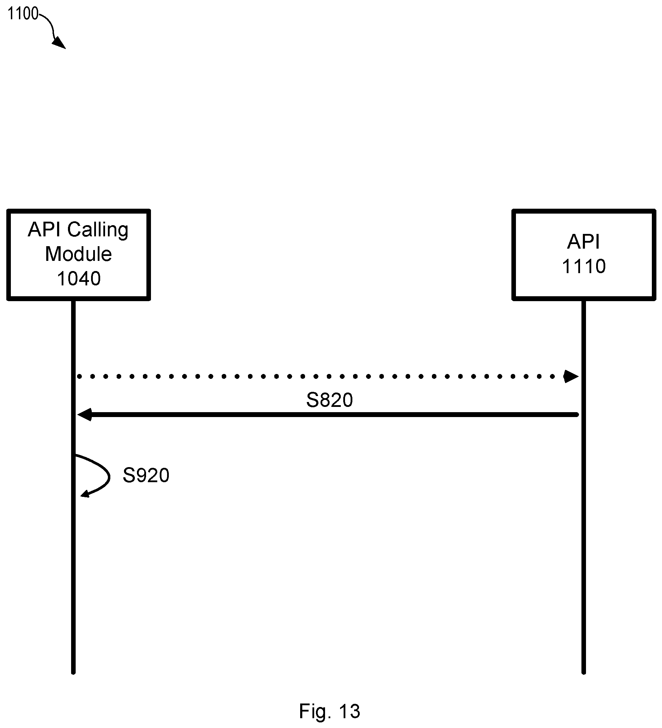

Referring to FIG. 9 and FIG. 13, application 1020 obtains information (e.g., S910). In some embodiments, the information obtained at S910 includes positional information, time information, notification information, user information, environment information electronic device state information, weather information, media information, historical information, event information, hardware information and/or motion information. In response to and/or after obtaining the information at S910, application 1020 performs an operation with the information (e.g., S920). In some embodiments, the operation performed at S920 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 1130 based on the information.

In some embodiments, one or more steps of the method of FIG. 8 and/or the method of FIG. 9 is performed in response to a trigger. In some embodiments, the trigger includes detection of an event, a notification received from system 1130, a user input, and/or a response to a call to an API provided by system 1130.

In some embodiments, the instructions of application 1020, when executed, control device 1010 to perform the method of FIG. 8 and/or the method of FIG. 9 by calling an application programming interface (API) (e.g., API 1110) provided by system 1130. In some embodiments, application 1020 performs at least a portion of the method of FIG. 8 and/or the method of FIG. 9 without calling API 1110.

In some embodiments, one or more steps of the method of FIG. 8 and/or the method of FIG. 9 includes calling an API (e.g., API 1110) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 10, device 1010 is illustrated. In some embodiments, device 1010 is a personal computing device, a smart phone, a smart watch, a fitness tracker, a head mounted display (HMD) device, a media device, a communal device, a speaker, a television, and/or a tablet. As illustrated in FIG. 10, device 1010 includes application 1020 and operating system (e.g., system 1130 shown in FIG. 11). Application 1020 includes application implementation module 1030 and API calling module 1040. System 1130 includes API 1110 and implementation module 1120. It should be recognized that device 1010, application 1020, and/or system 1130 can include more, fewer, and/or different components than illustrated in FIG. 10 and 11.

In some embodiments, application implementation module 1030 includes a set of one or more instructions corresponding to one or more operations performed by application 1020. For example, when application 1020 is a messaging application, application implementation module 1030 can include operations to receive and send messages. In some embodiments, application implementation module 1030 communicates with API calling module to communicate with system 1130 via API 1110 (shown in FIG. 11).

In some embodiments, API 1110 is a software module (e.g., a collection of computer-readable instructions) that provides an interface that allows a different module (e.g., API calling module 1040) to access and/or use one or more functions, methods, procedures, data structures, classes, and/or other services provided by implementation module 1120 of system 1130. For example, API-calling module 1040 can access a feature of implementation module 1120 through one or more API calls or invocations (e.g., embodied by a function or a method call) exposed by API 1110 and can pass data and/or control information using one or more parameters via the API calls or invocations. In some embodiments, API 1110 allows application 1020 to use a service provided by a Software Development Kit (SDK) library. In other embodiments, application 1020 incorporates a call to a function or method provided by the SDK library and provided by API 1110 or uses data types or objects defined in the SDK library and provided by API 1110. In some embodiments, API-calling module 1040 makes an API call via API 1110 to access and use a feature of implementation module 1120 that is specified by API 1110. In such embodiments, implementation module 1120 can return a value via API 1110 to API-calling module 1040 in response to the API call. The value can report to application 1020 the capabilities or state of a hardware component of device 1010, including those related to aspects such as input capabilities and state, output capabilities and state, processing capability, power state, storage capacity and state, and/or communications capability. In some embodiments, API 1110 is implemented in part by firmware, microcode, or other low level logic that executes in part on the hardware component.

In some embodiments, API 1110 allows a developer of API-calling module 1040 (which can be a third-party developer) to leverage a feature provided by implementation module 1120. In such embodiments, there can be one or more API-calling modules (e.g., including API-calling module 1040) that communicate with implementation module 1120. In some embodiments, API 1110 allows multiple API-calling modules written in different programming languages to communicate with implementation module 1120 (e.g., API 1110 can include features for translating calls and returns between implementation module 1120 and API-calling module 1040) while API 1110 is implemented in terms of a specific programming language. In some embodiments, API-calling module 1040 calls APIs from different providers such as a set of APIs from an OS provider, another set of APIs from a plug-in provider, and/or another set of APIs from another provider (e.g., the provider of a software library) or creator of the another set of APIs.

Examples of API 1110 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device 1010. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation module 1120 is a system (e.g., operating system, server system) software module (e.g., a collection of computer-readable instructions) that is constructed to perform an operation in response to receiving an API call via API 1110. In some embodiments, implementation module 1120 is constructed to provide an API response (via API 1110) as a result of processing an API call. By way of example, implementation module 1120 and API-calling module 180 can each be any one of an operating system, a library, a device driver, an API, an application program, or other module. It should be understood that implementation module 1120 and API-calling module 1040 can be the same or different type of module from each other. In some embodiments, implementation module 1120 is embodied at least in part in firmware, microcode, or other hardware logic.

In some embodiments, implementation module 1120 returns a value through API 1110 in response to an API call from API-calling module 1040. While API 1110 defines the syntax and result of an API call (e.g., how to invoke the API call and what the API call does), API 1110 might not reveal how implementation module 1120 accomplishes the function specified by the API call. Various API calls are transferred via the one or more application programming interfaces between API-calling module 1040 and implementation module 1120. Transferring the API calls can include issuing, initiating, invoking, calling, receiving, returning, and/or responding to the function calls or messages. In other words, transferring can describe actions by either of API-calling module 1040 or implementation module 1120. In some embodiments, a function call or other invocation of API 1110 sends and/or receives one or more parameters through a parameter list or other structure.

In some embodiments, implementation module 1120 provides more than one API, each providing a different view of or with different aspects of functionality implemented by implementation module 1120. For example, one API of implementation module 1120 can provide a first set of functions and can be exposed to third party developers, and another API of implementation module 1120 can be hidden (e.g., not exposed) and provide a subset of the first set of functions and also provide another set of functions, such as testing or debugging functions which are not in the first set of functions. In some embodiments, implementation module 1120 calls one or more other components via an underlying API and thus be both an API calling module and an implementation module. It should be recognized that implementation module 1120 can include additional functions, methods, classes, data structures, and/or other features that are not specified through API 1110 and are not available to API calling module 1040. It should also be recognized that API calling module 1040 can be on the same system as implementation module 1120 or can be located remotely and access implementation module 1120 using API 1110 over a network. In some embodiments, implementation module 1120, API 1110, and/or API-calling module 1040 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

In some embodiments, method 900 (FIG. 9) is performed at a first computer system (as described herein) via a system process (e.g., an operating system process, a server system process) that is different from one or more applications executing and/or installed on the first computer system.

In some embodiments, method 900 (FIG. 9) is performed at a first computer system (as described herein) by an application that is different from a system process. In some embodiments, the instructions of the application, when executed, control the first computer system to perform method 900 (FIG. 9) by calling an application programming interface (API) provided by the system process. In some embodiments, the application performs at least a portion of method 900 without calling the API.

In some embodiments, the application is an accessory companion application that is constructed for processing communication and management between the first computer system and an accessory device (e.g., a wearable device, such as, for example, a watch).

In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform method 900 (FIG. 9) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API.

In some embodiments, at least one API is a software module (e.g., a collection of computer-readable instructions) that provides an interface that allows a different module (e.g., API calling module) to access and use one or more functions, methods, procedures, data structures, classes, and/or other services provided by an implementation module of the system process. The API can define one or more parameters that are passed between the API calling module and the implementation module. In some embodiments, the API 1110 defines a first API call that can be provided by API calling module 1110, wherein the definition for the first API call specifies the following call parameters: threshold distance for triggering the display of a manipulation object, option for displaying a grabber, etc. as discussed above in relation to rendering adjacent ornaments. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 1010) that runs the application. In some embodiments, the implementation module is included in an electronic device that is separate from the device that runs the application.

### V. EXAMPLE DEVICE

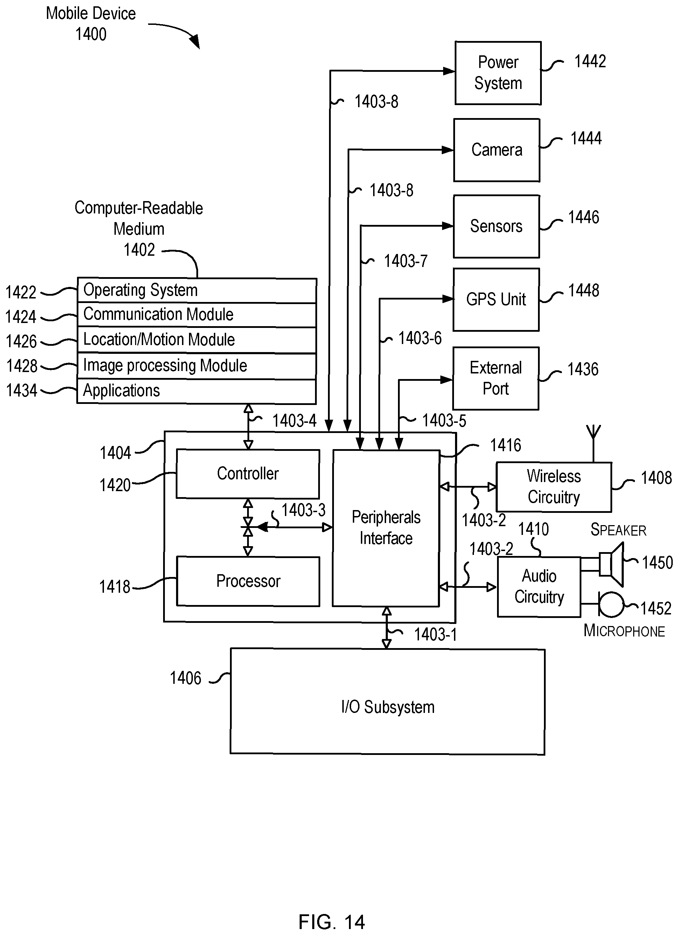

FIG. 14 is a block diagram of an example device 1400, which may be a mobile device. Device 1400 generally includes computer-readable medium 1402, a processing system 1404, an Input/Output (I/O) subsystem 1406, wireless circuitry 1408, and audio circuitry 1410 including speaker 1450 and microphone 1452. These components may be coupled by one or more communication buses or signal lines 1403. Device 1400 can be any portable mobile device, including a handheld computer, a tablet computer, a mobile phone, laptop computer, tablet device, media player, personal digital assistant (PDA), a key fob, a car key, an access card, a multi-function device, a mobile phone, a portable gaming device, a car display unit, or the like, including a combination of two or more of these items.

It should be apparent that the architecture shown in FIG. 14 is only one example of an architecture for device 1400, and that device 1400 can have more or fewer components than shown, or a different configuration of components. The various components shown in FIG. 14 can be implemented in hardware, software, or a combination of both hardware and software, including one or more signal processing and/or application specific integrated circuits.

Wireless circuitry 1408 is used to send and receive information over a wireless link or network to one or more other devices' conventional circuitry such as an antenna system, an RF transceiver, one or more amplifiers, a tuner, one or more oscillators, a digital signal processor, a CODEC chipset, memory, etc. Wireless circuitry 1408 can use various protocols, e.g., as described herein.

Wireless circuitry 1408 is coupled to processing system 1404 via peripherals interface 1416. Interface 1416 can include conventional components for establishing and maintaining communication between peripherals and processing system 1404. Voice and data information received by wireless circuitry 1408 (e.g., in speech recognition or voice command applications) is sent to one or more processors 1418 via peripherals interface 1416. One or more processors 1418 are configurable to process various data formats for one or more application programs 1434 stored on medium 1402.

Peripherals interface 1416 couple the input and output peripherals of the device to processor 1418 and computer-readable medium 1402. One or more processors 1418 communicate with computer-readable medium 1402 via a controller 1420. Computer-readable medium 1402 can be any device or medium that can store code and/or data for use by one or more processors 1418. Medium 1402 can include a memory hierarchy, including cache, main memory, and secondary memory.

Device 1400 also includes a power system 1442 for powering the various hardware components. Power system 1442 can include a power management system, one or more power sources (e.g., battery, alternating current (AC)), a recharging system, a power failure detection circuit, a power converter or inverter, a power status indicator (e.g., a light emitting diode (LED)), and any other components typically associated with the generation, management, and distribution of power in mobile devices.

In some embodiments, device 1400 includes a camera 1444. In some embodiments, device 1400 includes sensors 1446. Sensors 1446 can include accelerometers, compasses, gyrometers, pressure sensors, audio sensors, light sensors, barometers, altimeter, and the like. Sensors 1446 can be used to sense location aspects, such as auditory or light signatures of a location.

In some embodiments, device 1400 can include a GPS receiver, sometimes referred to as a GPS unit 1448. A mobile device can use a satellite navigation system, such as the Global Positioning System (GPS), to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information. In other embodiments, device 1400 may be configured to identify GLONASS signals, or any other similar type of satellite navigational signal.

One or more processors 1418 run various software components stored in medium 1402 to perform various functions for device 1400. In some embodiments, the software components include an operating system 1422, a communication module (or set of instructions) 1424, a location module (or set of instructions) 1426, an image processing module 1428, an odometry module 1430, and other applications (or set of instructions) 1434, such as a car locator app and a navigation app.

Operating system 1422 can be any suitable operating system, including iOS, Mac OS, Darwin, RTXC, LINUX, UNIX, OS X, WINDOWS, or an embedded operating system such as VxWorks. The operating system can include various procedures, sets of instructions, software components and/or drivers for controlling and managing general system tasks (e.g., memory management, storage device control, power management, etc.) and facilitates communication between various hardware and software components.

Communication module 1424 facilitates communication with other devices over one or more external ports 1436 or via wireless circuitry 1408 and includes various software components for handling data received from wireless circuitry 1408 and/or external port 1436. External port 1436 (e.g., USB, FireWire, Lightning connector, 60-pin connector, etc.) is adapted for coupling directly to other devices or indirectly over a network (e.g., the Internet, wireless LAN, etc.).

Location/motion module 1426 can assist in determining the current position (e.g., coordinates or other geographic location identifier) and motion of device 1400. Modern positioning systems include satellite based positioning systems, such as Global Positioning System (GPS), cellular network positioning based on "cell IDs," and Wi-Fi positioning technology based on a Wi-Fi networks. GPS also relies on the visibility of multiple satellites to determine a position estimate, which may not be visible (or have weak signals) indoors or in "urban canyons." In some embodiments, location/motion module 1426 receives data from GPS unit 1448 and analyzes the signals to determine the current position of the mobile device. In some embodiments, location/motion module 1426 can determine a current location using Wi-Fi or cellular location technology. For example, the location of the mobile device can be estimated using knowledge of nearby cell sites and/or Wi-Fi access points with knowledge also of their locations. Information identifying the Wi-Fi or cellular transmitter is received at wireless circuitry 1408 and is passed to location/motion module 1426. In some embodiments, the location module receives the one or more transmitter IDs. In some embodiments, a sequence of transmitter IDs can be compared with a reference database (e.g., Cell ID database, Wi-Fi reference database) that maps or correlates the transmitter IDs to position coordinates of corresponding transmitters, and computes estimated position coordinates for device 1400 based on the position coordinates of the corresponding transmitters. Regardless of the specific location technology used, location/motion module 1426 receives information from which a location fix can be derived, interprets that information, and returns location information, such as geographic coordinates, latitude/longitude, or other location fix data.

Image processing module 1428 can include various sub-modules or systems, e.g., as described herein with respect to FIGS. 1 - 5.

The one or more application programs 1434 on the mobile device can include any applications installed on the device 1400, including without limitation, a browser, address book, contact list, email, instant messaging, word processing, keyboard emulation, widgets, JAVA-enabled applications, encryption, digital rights management, voice recognition, voice replication, a music player (which plays back recorded music stored in one or more files, such as MP3 or AAC files), etc.

There may be other modules or sets of instructions (not shown), such as a graphics module, a time module, etc. For example, the graphics module can include various conventional software components for rendering, animating, and displaying graphical objects (including without limitation text, web pages, icons, digital images, animations, and the like) on a display surface. In another example, a timer module can be a software timer. The timer module can also be implemented in hardware. The time module can maintain various timers for any number of events.

The I/O subsystem 1406 can be coupled to a display system (not shown), which can be a touch-sensitive display. The display system displays visual output to the user in a GUI. The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other embodiments.

In some embodiments, I/O subsystem 1406 can include a display and user input devices such as a keyboard, mouse, and/or track pad. In some embodiments, I/O subsystem 1406 can include a touch-sensitive display. A touch-sensitive display can also accept input from the user based on haptic and/or tactile contact. In some embodiments, a touch-sensitive display forms a touch-sensitive surface that accepts user input. The touch-sensitive display/surface (along with any associated modules and/or sets of instructions in medium 1402) detects contact (and any movement or release of the contact) on the touch-sensitive display and converts the detected contact into interaction with user-interface objects, such as one or more soft keys, that are displayed on the touch screen when the contact occurs. In some embodiments, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, the I/O subsystem can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some embodiments, in addition to the touch screen, device 1400 can include a touchpad (not shown) for activating or deactivating particular functions. In some embodiments, the touchpad is a touch-sensitive area of the device that, unlike the touch screen, does not display visual output. The touchpad can be a touch-sensitive surface that is separate from the touch-sensitive display, or an extension of the touch-sensitive surface formed by the touch-sensitive display.

In some embodiments, some or all of the operations described herein can be performed using an application executing on the user's device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium, such as a compact disk (CD) or DVD (digital versatile disk), flash memory, and the like. The computer readable medium may be any combination of such storage or transmission devices.

Computer programs incorporating various features of the present disclosure may be encoded on various computer readable storage media; suitable media include magnetic disk or tape, optical storage media, such as compact disk (CD) or DVD (digital versatile disk), flash memory, and the like. Computer readable storage media encoded with the program code may be packaged with a compatible device or provided separately from other devices. In addition, program code may be encoded and transmitted via wired optical, and/or wireless networks conforming to a variety of protocols, including the Internet, thereby allowing distribution, e.g., via Internet download. Any such computer readable medium may reside on or within a single computer product (e.g., a solid state drive, a hard drive, a CD, or an entire computer system), and may be present on or within different computer products within a system or network. A computer system may include a monitor, printer, or other suitable display for providing any of the results mentioned herein to a user.

As described above, one aspect of the present technology is the gathering and use of data available from various sources to improve prediction of users that a user may be interested in communicating with. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to predict users that a user may want to communicate with at a certain time and place. Accordingly, use of such personal information data included in contextual information enables people centric prediction of people a user may want to interact with at a certain time and place. Further, other uses for personal information data that benefit the user are also contemplated by the present disclosure. For instance, health and fitness data may be used to provide insights into a user's general wellness or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of people centric prediction services, the present technology can be configured to allow users to select to "opt in" or "opt out" of participation in the collection of personal information data during registration for services or anytime thereafter. In another example, users can select not to provide location information for recipient suggestion services. In yet another example, users can select to not provide precise location information, but permit the transfer of location zone information. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, users that a user may want to communicate with at a certain time and place may be predicted based on non-personal information data or a bare minimum amount of personal information, such as the content being requested by the device associated with a user, other non-personal information, or publicly available information.

Although the disclosure has been described with respect to specific embodiments, it will be appreciated that the disclosure is intended to cover all modifications and equivalents within the scope of the following claims.

All patents, patent applications, publications, and descriptions mentioned herein are incorporated by reference in their entirety for all purposes. None is admitted to be prior art. Where a conflict exists between the instant application and a reference provided herein, the instant application shall dominate.
Exemplary methods, devices, electronic devices, and non-transitory computer-readable storage media are set out in the following items:
1. A method for providing a user interface to manipulate objects in a 3D environment displayed on a headset device, the method comprising performing, by the headset device:
   receiving a definition of a first three-dimensional (3D) object relative to a first volume, the definition providing object coordinates of the first 3D object relative to volume coordinates of the first volume;
   displaying the first 3D object in the 3D environment based on the volume coordinates of the first volume, wherein at least part of the first volume is transparent to a user of the headset device;
   tracking eye movements of the user to determine a first gaze of the user;
   determining the first gaze is within a threshold distance of a first portion of a surface of the first volume; and
   responsive to determining the first gaze is within the threshold distance of the first portion of a surface of the first volume, altering a visual display of the first portion of the surface of the first volume, displaying a manipulation object at a specified location relative to the first portion of the surface for manipulating the first 3D object, or both.
2. The method of item 1, further comprising resizing the first 3D object by moving the manipulation object.
3. The method of item 1 or 2, wherein altering the visual display of the first portion of the surface comprises changing brightness, color of the first portion, or making area outside the first portion become transparent while leaving the first portion visible.
4. The method of any of the preceding items, wherein the threshold distance is a radius in pixels forming a circular area.
5. The method of any of the preceding items, wherein the first portion of the surface of the first volume is a portion of a top surface, a side surface, or a bottom surface of the first volume.
6. The method of any of the preceding items, further comprising:
   receiving a definition of a second 3D object relative to a second volume;
   determining the first gaze is within the threshold distance of a second portion of a surface of the second volume; and
   responsive to determining the first gaze is within the threshold distance of the second portion of a surface of the second volume, altering a visual display of the second portion of the surface of the second volume rather than altering the visual display of the first portion of the surface of the first volume.
7. A method for rendering, in a computing device with a display depicting a three-dimensional (3D) environment, an ornament for a virtual object, the method comprising:
   rendering, by the computing device, the virtual object at a first location on the display of the 3D environment;
   receiving a user input at a second location on the display of the 3D environment;
   determining a distance between (1) the user input at the second location and (2) the virtual object at the first location or a surface of a volume within which the virtual object is defined; and
   in response to determining the distance is within a threshold, rendering an ornament of or adjacent to the volume of the virtual object.
8. The method of item 7, further comprising receiving a request or an input to adjust a value or size of the ornament, and in response to receiving the input or request to adjust the value or size of the ornament, adjusting a corresponding size of the virtual object accordingly.
9. The method of item 8, wherein the size of the ornament is proportional to the size of the volume.
10. The method of item 8, wherein the value of the ornament is a size of the ornament, the size of the ornament being proportional to the size of the virtual object.
11. The method of any of the items 7-10 wherein the ornament is a flat surface rendered below a surface of the volume.
12. The method of item 10, wherein the ornament is a flat surface rendered below the first location of the virtual object, and is a circle or polygon.
13. The method of any of the items 7-12, wherein the threshold is a radius in pixels forming a circular area.
14. The method of any of the items 7-13, further comprising rendering the ornament transparent or not is configurable when the first location and the second location overlap.
15. A headset device, comprising:
   one or more processors; and
   a memory coupled to the one or more processors, the memory storing instructions that cause the one or more processors to perform any one or more of operations comprising:
      receiving a definition of a first three-dimensional (3D) object relative to a first volume, the definition providing object coordinates of the first 3D object relative to volume coordinates of the first volume;
      displaying the first 3D object in a 3D environment based on the volume coordinates of the first volume, wherein at least part of the first volume is transparent to a user of the headset device;
      tracking eye movements of the user to determine a first gaze of the user;
      determining the first gaze is within a threshold distance of a first portion of a surface of the first volume; and
      responsive to determining the first gaze is within the threshold distance of the first portion of a surface of the first volume, altering a visual display of the first portion of the surface of the first volume, displaying a manipulation object at a specified location relative to the first portion of the surface for manipulating the first 3D object, or both.
16. The headset device of item 15, further comprising resizing the first 3D object by moving the manipulation object.
17. The headset device of item 15 or 16, wherein altering the visual display of the first portion of the surface comprises changing brightness, color of the first portion, or making area outside the first portion become transparent while leaving the first portion visible.
18. The headset device of any of the items 15-17, further comprising:
   receiving a definition of a second 3D object relative to a second volume;
   determining the first gaze is within the threshold distance of a second portion of a surface of the second volume; and
   responsive to determining the first gaze is within the threshold distance of the second portion of a surface of the second volume, altering a visual display of the second portion of the surface of the second volume rather than altering the visual display of the first portion of the surface of the first volume.
19. A computing device, comprising:
   one or more processors; and
   a memory coupled to the one or more processors, the memory storing instructions that cause the one or more processors to perform any one or more of operations comprising:
      rendering a virtual object at a first location on a display of a three-dimensional (3D) environment;
      receiving a user input at a second location on the display of the 3D environment;
      determining a distance between (1) the user input at the second location and (2) the virtual object at the first location or a surface of a volume within which the virtual object is defined; and
      in response to determining the distance is within a threshold, rendering an ornament of or adjacent to the volume of the virtual object.
20. The computing device of item 19, further comprising receiving a request to adjust size of the ornament, and in response to receiving the request to adjust the size of the ornament, adjusting size of the virtual object accordingly.
21. The computing device of item 19 or 20, wherein the ornament is a flat surface rendered below a surface of the volume.
22. The computing device of any of the items 19-21, further comprising rendering the ornament transparent or not is configurable when the first location and the second location overlap.
23. A non-transitory computer readable medium, the non-transitory computer readable medium storing instructions that when executed on one or more processors perform any one of more of operations of items 1-14.
24. A computer readable medium storing instructions of an application for controlling an electronic device to perform a method, the method comprising:
   obtaining first information; and
   providing the first information to an operating system, wherein the first information is information for performing any of the above methods.
25. A computer readable medium storing instructions of an application for controlling an electronic device to perform a method, the method comprising:
   obtaining first information; and
   performing a first operation with the first information, wherein the first information is based on any of the above methods.
The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method for providing a user interface to manipulate objects in a 3D environment displayed on a headset device, the method comprising performing, by the headset device:
receiving a definition of a first three-dimensional (3D) object relative to a first volume, the definition providing object coordinates of the first 3D object relative to volume coordinates of the first volume;
displaying the first 3D object in the 3D environment based on the volume coordinates of the first volume, wherein at least part of the first volume is transparent to a user of the headset device;
tracking eye movements of the user to determine a first gaze of the user;
determining the first gaze is within a threshold distance of a first portion of a surface of the first volume; and
responsive to determining the first gaze is within the threshold distance of the first portion of a surface of the first volume, altering a visual display of the first portion of the surface of the first volume, displaying a manipulation object at a specified location relative to the first portion of the surface for manipulating the first 3D object, or both.

2. The method of claim 1, further comprising resizing the first 3D object by moving the manipulation object.

3. The method of claim 1 or 2, wherein altering the visual display of the first portion of the surface comprises changing brightness, color of the first portion, or making area outside the first portion become transparent while leaving the first portion visible.

4. The method of any of the preceding claims, wherein the threshold distance is a radius in pixels forming a circular area.

5. The method of any of the preceding claims, wherein the first portion of the surface of the first volume is a portion of a top surface, a side surface, or a bottom surface of the first volume.

6. The method of any of the preceding claims, further comprising:
receiving a definition of a second 3D object relative to a second volume;
determining the first gaze is within the threshold distance of a second portion of a surface of the second volume; and
responsive to determining the first gaze is within the threshold distance of the second portion of a surface of the second volume, altering a visual display of the second portion of the surface of the second volume rather than altering the visual display of the first portion of the surface of the first volume.

7. A method for rendering, in a computing device with a display depicting a three-dimensional (3D) environment, an ornament for a virtual object, the method comprising:
rendering, by the computing device, the virtual object at a first location on the display of the 3D environment;
receiving a user input at a second location on the display of the 3D environment;
determining a distance between (1) the user input at the second location and (2) the virtual object at the first location or a surface of a volume within which the virtual object is defined; and
in response to determining the distance is within a threshold, rendering an ornament of or adjacent to the volume of the virtual object.

8. The method of claim 7, further comprising receiving a request to adjust size of the ornament, and in response to receiving the request to adjust the size of the ornament, adjusting size of the virtual object accordingly.

9. The method of claim 8, wherein the size of the ornament is proportional to the size of the volume.

10. The method of any of the preceding claims 7-9, wherein the ornament is a flat surface rendered below a surface of the volume.

11. The method of any of the preceding claims 7-10, wherein the threshold is a radius in pixels forming a circular area.

12. The method of any of the preceding claims 7-11, further comprising rendering the ornament transparent or not is configurable when the first location and the second location overlap.

13. A computer readable medium storing instructions that, when executed, control one or more processors to perform the method of any one of claims 1-12.

14. A headset device, comprising:
one or more processors; and
a memory coupled to the one or more processors, the memory storing instructions that cause the one or more processors to perform the method of any one of claims 1-6.

15. A computing device, comprising:
one or more processors; and
a memory coupled to the one or more processors, the memory storing instructions that cause the one or more processors to perform the method of any one of claims 7-12.
